Europäisches Patentamt

European Patent Office

Office européen des brevets

(11) Veröffentlichungsnummer: **0 510 304 A1**

## EUROPÄISCHE PATENTANMELDUNG

(21) Anmeldenummer: **92101582.2**

(22) Anmeldetag: **31.01.92**

(51) Int. Cl.5: **F02F 11/00**, F16J 15/32

(30) Priorität: **20.04.91 DE 4112937**

(43) Veröffentlichungstag der Anmeldung:
**28.10.92 Patentblatt 92/44**

(84) Benannte Vertragsstaaten:
**DE ES FR GB IT**

(71) Anmelder: **GOETZE AG**
**Bürgermeister-Schmidt-Strasse 17**
**W-5093 Burscheid 1(DE)**

(72) Erfinder: **Stephan, Bernd, Dipl.-Ing.**
**Endringhausen 5**
**W-5630 Remscheid 11(DE)**
Erfinder: **Ecker, Rainer, Dipl.-Ing.**
**Huflandstrasse 20**
**W-5090 Leverkusen 3(DE)**

(54) **Gehäuseverschlussdeckel.**

(57) Die Erfindung betrifft einen Gehäuseverschlußdeckel für Kurbelwellengehäuse von Kraftfahrzeugmotoren mit von unten anflanschbarer Ölwanne. Der
vorzugsweise aus Blech geformte Verschlußdeckel
weist einen mit der Ölwanne verspannbaren Flansch
(10) auf, welcher lediglich über Stege (16,16'), die
durch Schlitze (13,14) gebildet sind, mit dem kurbelwellenseitigen Flansch (5) des Gehäuseverschlußdeckels (1) nachgiebig verbunden ist.

FIG. 2

Die Erfindung betrifft einen Gehäuseverschlußdeckel, insbesondere für Kurbelwellengehäuse von Kfz-Motoren, wobei sich im Einbauzustand eine Welle durch den Deckel erstreckt und eine Ölwanne von unten anflanschbar ist, mit einer dynamischen Lippendichtung für die Welle sowie zwei unter einem Winkel von üblicherweise 90° aufeinandertreffenden, statisch abzudichtenden Flanschflächen, deren eine radial zur dichten Verbindung mit dem Kurbelwellengehäuse und deren andere zur dichten Verbindung mit der Ölwanne sich erstreckt.

Die DE-OS 39 42 448 offenbart einen Gehäusedeckel zur Abdichtung von Kurbelwellengehäusen mit von unten anflanschbarer Ölwanne. Der Gehäusedeckel weist einen vom Deckel abgetrennten Flansch als separates Bauteil auf, mit dem sowohl die Ölwanne als auch das Kurbelwellengehäuse verschraubbar sind. Über eine anvulkanisierte Gummischicht besteht eine Verbindung zwischen Flansch und dem restlichen Deckelkörper. Mit dieser Konstruktion ist es zwar möglich, Fertigungstoleranzen auszugleichen, indem die Gummischicht beim Einbau des Deckels gestreckt oder gestaucht wird, bis die entsprechenden Befestigungstoleranzen der abzudichtenden Bauteile passend fluchten.

Bei Kfz-Motoren kommt es aber während des Betriebes zu Schwingungen des Motorblockes, die nicht mit denen der Ölwanne übereinstimmen. Das bekannte Deckelsystem ist nicht in der Lage, eine Entkopplung zwischen kurbelwellenseitigem und ölwannenseitigem Gehäuseflansch zu ermöglichen, da der ölwannenseitige Flansch fest mit dem Kurbelwellengehäuse verschraubt ist. Darüber hinaus ist das bekannte System teuer in der Herstellung, da zwei separate Bauteile gefertigt, bearbeitet und miteinander über eine anvulkanisierte Gummischicht verbunden werden müssen.

Der Erfindung liegt die Aufgabe zugrunde, einen bekannten Gehäuseverschlußdeckel so zu verbessern, daß nach dem Einbau des Deckels die Ölwanne schwingungstechnisch vom Gehäuseverschlußdeckel abgekapselt wird.

Diese Aufgabe wird erfindungsgemäß dadurch gelöst, daß in dem ölwannenseitigen Flansch verformbare Stege bildende Schlitze angeordnet sind, so daß der Flansch nachgiebig mit dem kurbelwellenseitigen Flansch des Gehäuseverschlußdeckels verbunden ist. Durch diese Maßnahme ist der ölwannenseitige Flansch herstellungstechnisch von Anfang an Teil des Gehäuseverschlußdeckels jedoch schwingungsmäßig vom kurbelwellenseitigen Flansch des Gehäuseverschlußdeckels abgekoppelt, da die relativ dünnen Verbindungsstege eine Relativbewegung zwischen beiden Flanschen des Gehäuseverschlußdeckels zulassen.

Einem weiteren Gedanken der Erfindung gemäß, sind die Stege an den längsseitigen Endbereichen des Flansches angeordnet, so daß eine relativ freie radiale Beweglichkeit des ölwannenseitigen Flansches ermöglicht wird. Um auch eine gute Beweglichkeit quer zur radialen Beweglichkeit, das heißt in axialer Richtung, zu ermöglichen, verlaufen die Stege schräg zur Gehäuseverschlußdeckelachse.

Überdies besteht die Möglichkeit, einen Schlitz in dem kurbelwellenseitigen Flansch anzuordnen und diesen mit elastomerem Material auszufüllen. Diese Maßnahme hat den Vorteil, daß der am ölwannenseitigen Flansch angeordnete Dichtstreifen ebenfalls abgekoppelt ist und somit die Dichtwirkung verbessert wird.

Die Erfindung ist in der Zeichnung dargestellt und wird im folgenden näher erläutert. Es zeigen:

Figur 1 eine Vorderansicht eines Gehäuseverschlußdeckels

Figur 2 einen vergrößerten Teilschnitt gemäß II - II

Figur 3 einen vergrößerten Teilschnitt gemäß III - III

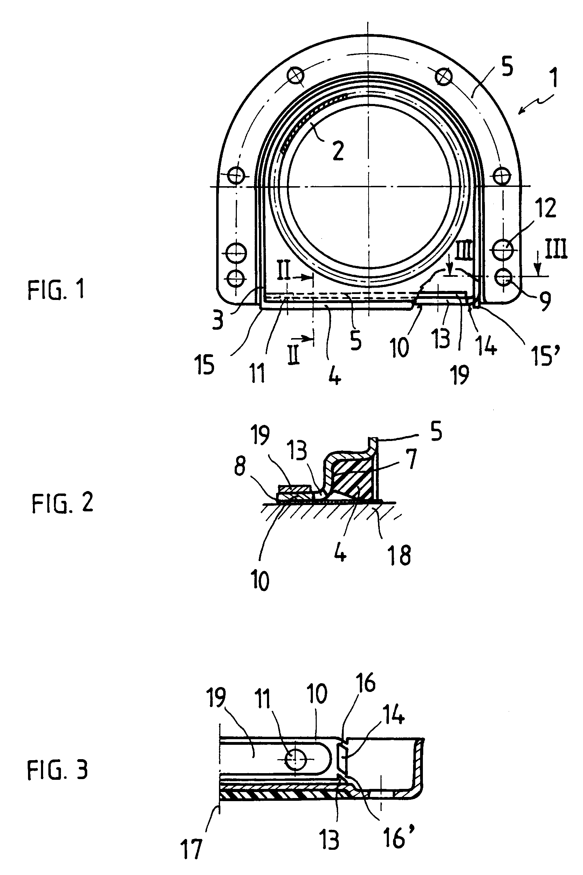

Der in der Figur 1 dargestellte Gehäuseverschlußdeckel dient zur Abdichtung eines Kurbelwellengehäuses eines Kraftfahrzeugmotors mit von unten anflanschbarer Ölwanne. Der Gehäuseverschlußdeckel (1) besteht aus einem topfförmig gezogenen Blechkörper, der zur Abdichtung der im Einbauzustand rotierenden Kurbelwelle (nicht gezeichnet) dient, einem dynamisch belasteten Dichtungsring (2) aus elastomerem Werkstoff sowie statisch wirkenden Dichtstreifen (3 und 4), ebenfalls aus elastomerem Werkstoff, die einstückig ineinander übergehen. Der Dichtstreifen (3) dient zur statischen Abdichtung gegenüber dem Kurbelwellengehäuse (nicht gezeichnet) und der Dichtstreifen (4) zur statischen Abdichtung gegenüber der Ölwanne (18) (Figur 2). Im Einbauzustand liegt demzufolge die radiale Flanschfläche (5) des Gehäuseverschlußdeckels (1) mit dem Dichtstreifen (3) am Kurbelwellengehäuse an und wird mit Hilfe von durch Löcher (9) steckbaren Schrauben verspannt. Zur lagegerechten Fixierung des Gehäuseverschlußdeckels (1) gegenüber dem Kurbelwellengehäuse dienen Bohrungen (12) zur Aufnahme von Zentrierstiften (nicht gezeichnet). Eine weitere radiale Flanschfläche (7) (Figur 2), die gegenüber der Flanschfläche (5) axial zurückgesetzt ist, dient zur Aufnahme des Dichtstreifens (4) (Figur 2). Die Ölwanne (18) stützt sich radial an einem axialen Flansch (10) ab, wobei zwischen Ölwanne (18) und Flansch (10) eine Flachdichtung (8) angeordnet ist.

Um den ölwannenseitigen Flansch (10) axial und radial nachgiebig zu gestalten, wurden in den Flansch (10) Schlitze (13,14) (Figuren 2, 3) eingebracht, wodurch an den längsseitigen Endbereichen (15,15') verformbare Stege (16,16') gebildet sind. Die Stege (16,16') verlaufen schräg zur Gehäuseverschlußdeckelachse (17) zur Erhöhung der Flexibilität des Flansches (10).

Damit der Flansch (10) sich nicht radial durchbiegt und zur Verschraubung der Ölwanne mit dem Flansch (10) ist ein zusätzlicher Verstärkungskörper (19) vorgesehen, der Gewindelöcher (11) zur Aufnahme der nicht weiter dargestellten Befestigungsschrauben aufweist.

Im Ausführungsbeispiel ist der Schlitz (13) derart angeordnet, daß bei radialer Auslenkung des Flansches (10) der Dichtstreifen (4) dieser Bewegung nicht folgt.

Gegebenenfalls kann es von Vorteil sein, den Dichtstreifen (4) ebenfalls radial nachgiebig zu gestalten. Hierzu kann der Schlitz (13) radial oberhalb des Dichtstreifens beispielsweise im kurbelwellenseitigen Flansch (5) angeordnet sein. Damit kein Öl aus dem abzudichtenden Kurbelwellengehäuse austreten kann, ist der Schlitz (13) in diesem Fall mit elastischem Material ausgefüllt (nicht gezeichnet). Durch Verlagerung des Schlitzes (13) in den kurbelwellenseitigen Flansch (5) ist der Dichtstreifen schwingungstechnisch vom Gehäuseverschlußdeckel abgekoppelt.

Die Erfindung ist nicht auf den zuvor beschriebenen Anwendungsfall beschränkt, sondern kann auch bei gleichen Abdichtverhältnissen angewendet werden, wie zum Beispiel bei Nockenwellen- oder Getriebewellen-Gehäusedeckeln.

**Patentansprüche**

1. Gehäuseverschlußdeckel, insbesondere für Kurbelwellengehäuse von Kfz-Motoren, wobei sich im Einbauzustand eine Welle durch den Deckel erstreckt und eine Ölwanne von unten anflanschbar ist, mit einer dynamischen Lippendichtung für die Welle sowie zwei unter einem Winkel von üblicherweise 90° aufeinandertreffenden, statisch abzudichtenden Flanschflächen, deren eine radial zur dichten Verbindung mit dem Kurbelwellengehäuse und deren andere zur dichten Verbindung mit der Ölwanne sich erstreckt, dadurch gekennzeichnet, daß in dem ölwannenseitigen Flansch (10) verformbare Stege (16,16') bildende Schlitze (13,14) angeordnet sind, so daß der Flansch (10) einstückig und nachgiebig mit dem kurbelwellenseitigen Flansch (5) des Gehäuseverschlußdeckels (1) verbunden ist.

2. Gehäussverschlußdeckel nach Anspruch 1, dadurch gekennzeichnet, daß die Stege (16,16') an den längsseitigen Endbereichen (15,15') des Flansches (10) angeordnet sind.

3. Gehäuseverschlußdeckel nach den Ansprüchen 1 und 2, dadurch gekennzeichnet, daß die Stege (16,16') schräg zur Gehäuseverschlußdeckelachse (17) verlaufen.

4. Gehäuseverschlußdeckel nach den Ansprüchen 1 bis 3, dadurch gekennzeichnet, daß der Schlitz (13) im kurbelwellenseitigen Flansch (5) angeordnet und daß der Schlitz (13) mit elastomerem Material verschlossen ist.

EP 0 510 304 A1

FIG. 1

FIG. 2

FIG. 3

4

Europäisches
Patentamt

**EUROPÄISCHER RECHERCHENBERICHT**

Nummer der Anmeldung

EP    92 10 1582

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 264 547 (GOETZE AG) <br> * Spalte 3, Zeile 36 - Spalte 4, Zeile 25; Abbildungen * <br> --- | 1 | F02F11/00 <br> F16J15/32 |
| D,A | DE-A-3 942 448 (DAIMLER-BENZ AG) <br> * Spalte 2, Zeile 38 - Spalte 3, Zeile 28; Abbildungen 2,3 * <br> --- | 1 | |
| A | US-A-4 265 495 (BACKLIN) <br> --- | | |
| A | EP-A-0 139 503 (GEORGE AMGUS &COMPANY LIMITED) <br><br> ----- | | |

|  |  |
|---|---|
| | **RECHERCHIERTE SACHGEBIETE (Int. Cl.5 )** |
| | F02F <br> F16J |

Der vorliegende Recherchenbericht wurde für alle Patentansprüche erstellt

| Recherchenort | Abschlußdatum der Recherche | Prüfer |
|---|---|---|
| DEN HAAG | 09 JUNI 1992 | MOUTON J.M.M.P. |